(19) Europäisches Patentamt
European Patent Office
Office européen des brevets

(11) Numéro de publication : **0 069 617**
**B1**

# (12) FASCICULE DE BREVET EUROPÉEN

(45) Date de publication du fascicule du brevet : **05.09.84**

(51) Int. Cl.$^3$ : **C 09 B 67/20**, C 09 B 67/54

(21) Numéro de dépôt : **82401085.4**

(22) Date de dépôt : **15.06.82**

## (54) Procédé de granulation de pigments organiques par voie humide.

(30) Priorité : **25.06.81 FR 8112494**

(43) Date de publication de la demande :
**12.01.83 Bulletin 83/02**

(45) Mention de la délivrance du brevet :
**05.09.84 Bulletin 84/36**

(84) Etats contractants désignés :
**BE CH DE FR GB IT LI NL**

(56) Documents cités :
**FR-A- 1 505 023**
**FR-A- 2 427 366**
**US-A- 4 202 815**

(73) Titulaire : **I.C.I. FRANCOLOR S.A.**
**8 Avenue Reaumur Boîte Postale 207**
**F-92142 Clamart Cedex (FR)**

(72) Inventeur : **Fournier, Pierre**
**25 rue Henri Boissières**
**F-76300 Sotteville-lès-Rouen (FR)**

(74) Mandataire : **Pugsley, Roger Graham et al**
**IMPERIAL CHEMICAL INDUSTRIES PLC Legal**
**Department: Patents PO Box 6**
**Welwyn Garden City Herts, AL7 1HD (GB)**

EP 0 069 617 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention, faite dans les services de la demanderesse, concerne la granulation des pigments organiques par voie humide.

Depuis de nombreuses années, pour rendre leur manipulation plus facile et moins polluante, on a cherché à présenter les pigments organiques, habituellement commercialisés à l'état de poudres, sous une forme aussi peu poussiéreuse que possible, notamment sous la forme de granulés obtenus par voie mécanique ou par voie humide.

La granulation des pigments organiques par voie humide consiste à traiter sous vive agitation une suspension aqueuse de pigment par un solvant organique. Cependant, ce procédé qui fait appel à des solvants qu'il faut nécessairement récupérer et recycler en raison de leur coût et des problèmes de pollution qu'engendrerait leur rejet, ne semble pas avoir connu le développement industriel espéré. Les solvants retenus jusqu'à présent appartiennent à différentes familles chimiques : hydrocarbures aliphatiques et cycloaliphatiques, hydrocarbures aromatiques, hydrocarbures aliphatiques halogénés, hydrocarbures aromatiques halogénés, alcools, cétones, éthers, esters, composés aromatiques nitrés, amides, amines, acides organiques. En fait, la nature de ces solvants (toxicité, stabilité, point éclair) et leur agressivité, au cours du séchage, pour la matière solide traitée, limitent l'intérêt de cette technique de granulation.

Pour pallier ces inconvénients, la présente invention propose un nouveau procédé de granulation de pigments organiques par voie humide, caractérisé en ce que l'on utilise comme solvant organique incomplètement miscible à l'eau un composé facilement hydrolysable de sorte qu'après agglomération des particules solides de pigment, le milieu liquide polyphasique initial peut être facilement et très rapidement transformé en une phase aqueuse homogène contenant les granulés en suspension. Cette transformation peut être réalisée de diverses manières, soit tout simplement en prolongeant sous agitation le contact des phases, soit par addition d'eau, soit par élévation de la température, soit par addition d'un agent alcalin, soit par l'action conjuguée de plusieurs des moyens précités. Dans ces conditions, on obtient, d'une part, des granulés de pigments organiques qu'on isole suivant les méthodes habituelles connues (par exemple, filtration-séchage) et, d'autre part, une phase aqueuse homogène, directement récupérable et valorisable.

Comme composés liquides hydrolysables, on aurait pu penser à des sulfochlorures, carboxychlorures ou autres dérivés halogénés réactifs. Cependant, l'hydrolyse de ces produits n'est pas toujours facile et présente de surcroît l'inconvénient de conduire à des mélanges de produits réactionnels, difficiles à valoriser directement sans un traitement de séparation approprié.

Selon la présente invention, on utilise comme composé hydrolysable l'anhydride acétique ou l'anhydride propionique, composés qui présentent l'avantage de s'hydrolyser facilement en donnant soit l'acide carboxylique correspondant (hydrolyse acide), soit un sel dudit acide (hydrolyse alcaline), soit un mélange des deux.

On utilise de préférence l'anhydride acétique ; non seulement, cet anhydride présente une cinétique d'hydrolyse particulièrement favorable en milieu turbulent, mais c'est aussi un produit industriel de coût modéré qui, de même que ses produits d'hydrolyse : l'acide acétique et l'acétate de sodium, est déjà consommé en grandes quantités dans différents secteurs de l'industrie chimique.

Selon l'invention, on peut aussi utiliser un mélange d'anhydride acétique et d'anhydride propionique. L'utilisation d'un tel mélange peut être particulièrement intéressante en raison notamment des différences de pouvoir solvant de ces deux anhydrides vis-à-vis de certaines substances d'enrobage des pigments. Ainsi, par exemple, l'emploi d'un mélange d'anhydride acétique et d'anhydride propionique permet l'incorporation d'additifs que l'utilisation du seul anhydride acétique rendrait difficile en raison de son moindre pouvoir solvant ; comme les constantes de dissociation des acides acétique et propionique sont très voisines, le mélange d'acides ou de sels, obtenu après hydrolyse, peut encore être récupéré et valorisé tel quel dans certains procédés de fabrication de matières colorantes azoïques.

Sous réserve d'une sensibilité particulière à l'anhydride utilisé (effet acylant ou solvant), le procédé de granulation selon l'invention peut être appliqué aux pigments organiques les plus divers, notamment aux pigments azoïques, azométhiniques, anthraquinoniques ou périnoniques et aux pigments de phtalocyanines ou d'imino-iso-indolinones. Le procédé selon l'invention convient particulièrement bien à la granulation des pigments azoïques usuels, tels que les jaunes d'arylamides, les jaunes de diarylides, les orangés disazoïques dits « orangés de benzidine » et les pigments (le plus souvent de couleur rouge, rubis ou bordeaux) constitués par la laque ou le sel d'un métal alcalinoterreux et d'un colorant monoazoïque résultant de la copulation du diazo d'un acide aminotoluènesulfonique, éventuellement substitué, avec le β-naphtol ou l'acide hydroxy-3 naphtoïque-2. Le procédé de granulation selon l'invention peut évidemment être appliqué non seulement à des pigments purs, mais aussi à des mélanges de pigments ou à des compositions pigmentaires contenant des additifs qui peuvent être introduits en cours de synthèse ou par toute autre méthode particulière d'incorporation.

Pour la mise en œuvre du procédé selon l'invention, on part de préférence d'un gâteau de presse dont la concentration en pigment peut varier suivant la nature de ce dernier et ses conditions de synthèse et de finition. On peut également partir d'un pigment en poudre qu'on réempâte dans l'eau. On peut aussi

appliquer le procédé selon l'invention à une formation de pigment fraîchement préparée, mais on retrouve alors dans le filtrat les sous-produits de synthèse (sels, excès de réactifs, d'acides ou d'alcalis) ce qui en limite forcément l'utilisation ; toutefois, cette façon de procéder demeure une possibilité qu'on ne peut exclure, à condition de ne pas être exigeant sur la qualité du filtrat récupéré ou de consentir à lui faire subir une purification ultérieure. L'addition éventuelle, à la suspension aqueuse de pigment, d'un sel alcalin de l'acide carboxylique correspondant à l'anhydride utilisé permet, si on le souhaite, de diminer la solubilité de l'anhydride dans l'eau et d'éviter par effet tampon un trop fort abaissement du pH de la phase aqueuse, susceptible dans certains cas d'être préjudiciable à la qualité du pigment obtenu.

L'anhydride ou le mélange d'anhydrides est de préférence ajouté rapidement à la suspension pigmentaire aqueuse et la mise en contact est réalisée très simplement par mélangeage turbulent à l'aide d'un système d'agitation efficace, tel par exemple qu'une turbine défloculeuse. Cette agitation efficace permet l'obtention de granulés de taille suffisamment homogène.

La quantité minimale d'anhydride à utiliser pour former le système polyphasique initial dépend d'abord de la nature de l'anhydride, puis de la quantité d'eau de la phase antagoniste, ainsi que de la concentration en acylate éventuellement présent dans la phase aqueuse. Dans le cas de l'anhydride acétique, cette quantité minimale est d'environ 20 à 25 % en poids par rapport à la quantité d'eau mise en jeu.

On peut par contre utiliser un excès important d'anhydride par rapport à l'eau sans risquer la formation de masses irréductibles de compactage. Le procédé selon l'invention ne nécessite pas de soins particuliers à ce niveau, en raison de la disparition rapide d'une grande partie de la phase solvant par hydrolyse, contrairement aux systèmes polyphasiques connus où le système demeure tel quel durant l'opération de granulation et où les proportions respectives d'eau et de solvant doivent être fixées avec précision. Cet avantage du procédé selon l'invention est particulièrement notable avec l'anhydride acétique dont on sait facilement provoquer les conditions d'une hydrolyse très rapide.

Cependant, un excès trop élevé d'anhydride par rapport à la quantité d'eau maintient plus longtemps la coprésence de deux phases liquides et les granulés se forment moins rapidement, après passage par une phase « flushée ». De plus, l'emploi d'une très grande proportion d'anhydride va à l'encontre de la rentabilité du procédé ; aussi, sans que cela corresponde à une limite effective de l'efficacité du procédé, une proportion de 100 % d'anhydride par rapport à l'eau est une limite supérieure pratique raisonnable.

La limite inférieure du rapport en poids : anhydride/pigment est fixée par la concentration de pigment acceptable dans la phase aqueuse et par la nécessité de mouiller suffisamment le pigment pour provoquer la granulation. En général, cette limite inférieure peut être difficilement abaissée au-dessous de 1. Pratiquement, on préfère maintenir le rapport : anhydride/pigment à une valeur comprise entre 1,2 et 7.

Compte tenu du facile mouillage du pigment par l'anhydride et du mélangeage turbulent réalisé, la granulation se produit rapidement. Il ne reste plus qu'à achever l'hydrolyse de l'anhydride, en mettant en œuvre l'un des moyens signalés plus haut (agitation, dilution, chauffage et/ou alcalinisation). Les granulés sont séparés de la phase aqueuse homogène de manière connue en soi, par exemple par filtration. Cette séparation est particulièrement facile et peut être réalisée à travers un système simple comme, par exemple, un tamis en laiton à mailles calibrées.

Selon une méthode préférée de l'invention, on isole les granulés juste après leur formation et on les reprend dans l'eau pour achever l'hydrolyse par l'un des moyens précités. Compte tenu de la vitesse d'hydrolyse, cette reprise, de préference effectuée sous agitation modérée, est généralement de courte durée. On procède ensuite à une nouvelle filtration et à un léger lavage des granulés humides pour éliminer au mieux l'acide ou le sel formé par l'hydrolyse.

L'extrait sec des granulés humides est le plus souvent supérieur à 40 %, c'est-à-dire nettement plus élevé que celui des suspensions pigmentaires habituelles. Ceci est particulièrement appréciable dans le domaine des pigments azoïques où il est difficile, par les méthodes conventionnelles, d'obtenir un extrait sec supérieur à 25 %. De plus, dans les conditions du procédé selon l'invention, cet extrait sec élevé est obtenu sans aucune compression des granulés humides. Ces derniers qui ne contiennent plus de solvant peuvent être séchés, sans investissement spécifique coûteux, dans toutes les installations de séchage classiques, par exemple dans une étuve à air chaud (60-70 °C).

Par ailleurs, en rassemblant les divers filtrats et eaux de lavage, on obtient après neutralisation éventuelle et, si nécessaire, après décoloration à l'aide de charbon actif, une solution aqueuse d'acide ou de sel que l'on peut utiliser telle quelle dans diverses industries, notamment dans la fabrication des matières colorantes. On peut aussi régler éventuellement le titre de cette solution à une valeur souhaitée pour sa commercialisation.

La taille des particules pigmentaires soumises au procédé de granulation selon l'invention est telle qu'on la trouve habituellement dans un gâteau de presse, c'est-à-dire étroitement dépendante des conditions de synthèse et de finition du pigment considéré. Bien que cela ne constitue pas une condition nécessaire pour appliquer efficacement le procédé selon l'invention, on peut éventuellement faire subir au gâteau de presse un broyage ou un malaxage en présence de solvants et/ou autres additifs pour améliorer l'état de division des particules pigmentaires.

Dans le procédé selon l'invention, l'emploi d'un produit auxiliaire de granulation n'est pas nécessaire pour l'obtention de granulés. Toutefois, compte tenu du pouvoir solvant non négligeable des anhydrides

acétique et propionique vis-à-vis de substances généralement connues pour améliorer le comportement d'application des pigments, on peut se servir de l'anhydride comme véhicule de choix pour l'incorporation de ces substances autour des pigments à granuler. Mieux même, l'anhydride peut constituer un milieu de transformation chimique privilégié pour certains additifs, tels que les dérivés organiques comportant une ou plusieurs fonctions facilement acylables comme, par exemple, les fonctions amino. Ce traitement avant emploi constitue un autre avantage notable du procédé selon l'invention.

Si l'utilisation d'additifs n'est pas indispensable, elle peut parfois s'avérer bénéfique pour le déroulement de la granulation et pour la cohésion des granulés obtenus. Les additifs que l'on peut utiliser dans le procédé selon l'invention sont préférentiellement choisis en fonction de leur solubilité ou de leur dispersabilité dans l'anhydride, dispersabilité qui peut être obtenue directement ou à l'aide d'un tiers-liquide tel qu'une huile minérale ou tout autre liquide habituellement utilisé dans la fabrication des pigments. Parmi les additifs les plus intéressants, on peut citer les acides carboxyliques aromatiques, cyclo-aliphatiques ou aliphatiques à longue chaîne, les acides abiétiques dérivés de la colophane, ainsi que les sels, anhydrides, esters et amides correspondants, les résines polymères telles que les dérivés de cellulose, l'alcool polyvinylique, les polyamides, les polyesters et les résines d'hydrocarbure, les alcools et amines aliphatiques, cycloaliphatiques, aromatiques et abiétiques.

Pour conserver au procédé selon l'invention son intérêt pratique, à savoir l'obtention, à côté des granulés, d'une solution d'acide ou de sel directement valorisable, il n'est pas souhaitable d'utiliser des additifs solubles ou dispersibles dans l'eau dans les conditions de réalisation. Toutefois, l'opération de granulation proprement dite peut s'effectuer facilement en présence de substances hydrosolubles ou hydrodispersibles telles que, par exemple, des agents mouillants comme des savons alcalins de dérivés anioniques, des savons d'acides amino-carboxyliques, des sulfates, sulfonates ou esters d'acides gras ou d'acides hydroxy-alcanesulfoniques, des surfactifs du type phosphate, des sels d'amines grasses, des dérivés d'acides gras et de polyamines ou d'amino-alcools, des amines quaternisées, des esters d'acides gras et de polyalcools, des alkylolamides d'acides gras, des adducts d'oxydes d'alkylènes, des lignosulfonates, des sels d'acide dinaphtylméthane disulfonique, des esters d'acides gras et d'alkylolamines, des dérivés quaternaires de la pyridine ou de l'imidazole, des dérivés de bétaïne, des mercaptans, amides, amines ou polypropylène glycols éthoxylés.

Les granulés obtenus conformément au procédé selon l'invention se présentent sous forme d'agglomérats assez réguliers, dans la plupart des cas grossièrement arrondis, et d'une taille comprise entre 0,1 et 4 mm, le plus souvent entre 0,3 et 2 mm.

La quantité d'anhydride mise en jeu pour la granulation peut varier dans une plage assez large sans pour autant modifier de façon notable la taille finale des granulés. En fait, leur dimensionnement et leur régularité dépendent surtout des conditions d'expérience (turbulence du milieu réactionnel, allongement du temps de brassage après formation des granulés). Du point de vue application, ces granulés ont un comportement comparable à celui des pigments en poudre correspondants, dans les domaines d'utilisation habituels des pigments considérés.

En plus des avantages déjà signalés, le procédé de granulation selon l'invention ne nécessite pas d'installations compliquées et coûteuses pour la récupération de solvants et ne pose pas de problèmes particuliers de sécurité puisque, une fois la granulation effectuée, il exclut toute manipulation de solvants toxiques ou inflammables et toute opération de séchage en présence de solvants.

Les exemples suivants dans lesquels les indications de pourcentage s'entendent en poids, illustrent l'invention sans la limiter.

## Exemple 1

Dans un réacteur cylindrique de 2 litres, on introduit 700 g d'un gâteau de filtration humide contenant 17 % du pigment disazoïque jaune de formule :

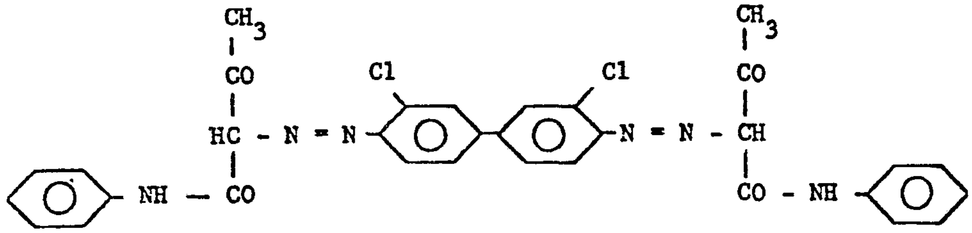

puis empâte pendant 5 minutes avec 120 ml d'eau à l'aide d'un agitateur à disque dentelé (type Dissolver) procurant un effet de cisaillement élevé. La suspension étant homogène, on règle la vitesse d'agitation à 1 000 tr/min et on introduit en 2 minutes 320 g d'anhydride acétique, tout en maintenant la température à 25 °C. Les granulés se forment rapidement. On poursuit le brassage pendant encore 10 minutes sous agitation modérée (300 tr/min), la température ne dépassant pas 30 °C. On filtre ensuite sur un tamis 160 NF en laiton (ouverture de maille : 0,109 mm) et lave à l'eau pour éliminer l'acide acétique. On recueille des granulés humides à forte teneur en pigment (extrait sec supérieur à 40 %). On les sèche dans

une étuve à air chaud à 60-70 °C. On obtient finalement des granulés ayant, pour la plupart, une taille voisine de 0,5 à 1 mm. Incorporés dans une encre offset, ils présentent des propriétés coloristiques voisines de celles du pigment en poudre correspondant.

D'autre part, la réunion du filtrat et des eaux de lavage fournit une solution limpide et incolore qui titre 23,5 % en acide acétique et peut être utilisée telle quelle dans la fabrication de certains pigments et colorants azoïques.

Exemple 2

Dans le même dispositif qu'à l'exemple 1, on empâte avec 100 ml d'eau et 150 g d'acétate de sodium cristallisé ($NaCH_3CO_2$, 3 $H_2O$) 600 g du même gâteau de filtration humide qu'à l'exemple 1. Quand la suspension est homogène, on règle la vitesse d'agitation à 1 000 tr/min et introduit en 3-4 minutes à l'aide d'une ampoule 300 g d'anhydride acétique, tout en maintenant la température à 25 °C environ. L'incorporation de l'anhydride acétique fluidifie le milieu et il se forme très vite des granulés qu'on sépare facilement par filtration sur Büchner.

On réempâte ces granulés dans 300 ml d'eau, puis neutralise la suspension jusqu'à pH 9 par addition d'une solution aqueuse à 40 % d'hydroxyde de sodium ; la neutralisation étant exothermique, la température s'élève à 35-40 °C. On isole les granulés par filtration et procède à un léger lavage sur filtre pour éliminer l'acétate de sodium. La réunion du filtrat ainsi obtenu et du premier filtrat, neutralisé de la même façon, fournit une solution aqueuse à 20 % d'acétate de sodium qui peut être soit concentrée par évaporation ou par addition d'acétate de sodium cristallisé, soit utilisée telle quelle comme élément d'agent tampon dans la fabrication de certains pigments azoïques.

Les granulés humides qui, sans aucun effort d'essorage, ont un extrait sec légèrement supérieur à 40 %, sont séchés à 60 °C dans une étuve à air chaud. On obtient finalement des granulés pigmentaires de caractéristiques voisines de celles des granulés obtenus à l'exemple 1. Incorporés dans un liant classique pour encres offset, ils présentent de bonnes propriétés coloristiques.

Exemple 3

On agite pendant 4 heures 8 g d'amine dérivée de la colophane (ROSIN AMINE D commercialisée par la firme HERCULES) dans 280 g d'anhydride acétique ; la réaction d'acétylation est légèrement exothermique.

D'autre part, à l'aide d'un dispositif d'agitation efficace (par exemple turbine défloculeuse à disque dentelé), on empâte 600 g d'un gâteau de filtration humide contenant 13,2 % du pigment disazoïque jaune de formule :

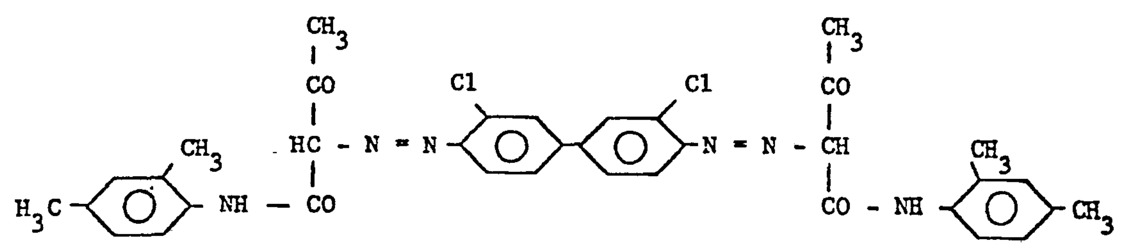

et 150 ml d'eau. On règle la vitesse d'agitation à 1 000 tr/min puis introduit en 5 minutes la solution obtenue au paragraphe précédent. La température se maintient à 25-30 °C et il se forme très vite des granulés sphériques de pigment qu'on sépare aisément par filtration.

On réempâte ces granulés sous faible agitation (300 tr/min) pendant 15 minutes dans 400 ml d'eau à 45 °C, puis procède à une nouvelle filtration et à un léger lavage. La réunion des filtrats fournit une solution à 23 % d'acide acétique, parfaitement limpide, qui peut être utilisée telle quelle dans la fabrication de pigments azoïques.

Les granulés humides qui ont une teneur élevée en extrait sec (environ 45 %), sont séchés à 60-70 °C. Les granulés obtenus sont de dimension assez régulière, la plupart d'entre eux ayant une taille voisine de 0,5 mm. Ils présentent un excellent comportement d'application dans les encres d'imprimerie.

Exemple 4

On opère comme aux deux premiers paragraphes de l'exemple précédent, sauf qu'on remplace la ROSIN AMINE D par une amine aliphatique à longue chaîne (NORAM OD commercialisé par la firme CECA) et qu'on n'isole pas les granulés aussitôt qu'ils sont formés, mais poursuit l'agitation pendant 12 minutes sous vitesse modérée (300 tr/min).

Au bout de ce temps, le mélange réactionnel dont la température est maintenue en dessous de 30 °C est constitué d'une phase liquide homogène contenant en suspension les granulés de pigment qu'on filtre et lave à l'eau pour éliminer l'acide acétique. On obtient des granulés humides à fort extrait sec (supérieur à 45 %). Après séchage à 60-70 °C, on recueille des granulés dont la majeure partie présente

une taille voisine de 0,5 à 1 mm. On peut les utiliser avantageusement pour la coloration des encres.

On recueille par ailleurs une solution limpide et pratiquement incolore, titrant 20 % en acide acétique, qui peut être utilisée telle quelle dans la fabrication de matières colorantes.

Exemple 5

Dans un réacteur muni d'un dispositif d'agitation efficace, on empâte dans 600 ml d'eau 400 g d'un gâteau de filtration humide contenant 13,3 % du pigment rubis, obtenu par copulation, en présence de colophane, du diazoïque de l'acide amino-2 méthyl-5 benzènesulfonique sur l'acide hydroxy-3 naphtoïque-2, puis transformation en laque de calcium, pigment qui répond à la formule :

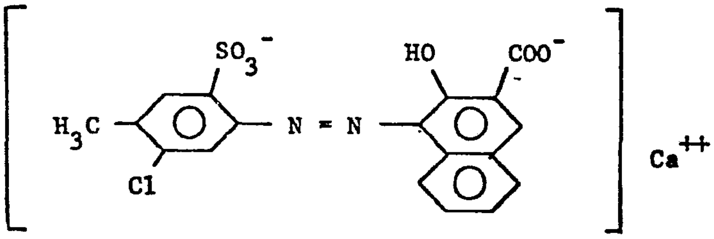

Après addition de 100 g d'acétate de sodium cristallisé, on règle l'agitation à 1 000 tr/min et on coule en 2 minutes 350 g d'anhydride acétique, tout en maintenant la température en dessous de 20 °C. Les granulés se forment rapidement. On filtre, puis réempâte les granulés humides dans 300 ml d'eau glacée. On introduit ensuite lentement de façon que la température ne dépasse pas 25 °C (soit en environ 20 minutes) et sous agitation modérée (300 tr/min) une solution aqueuse à 40 % d'hydroxyde de sodium en quantité suffisante pour amener le pH de la suspension à 9,5. On isole les granulés par filtration et les lave à l'eau pour éliminer l'acétate de sodium. Les granulés humides dont la teneur en extrait sec est relativement élevée (35 %) sont ensuite séchés à 60-70 °C dans une étuve à air chaud. On obtient finalement des granulés ayant en majorité une taille voisine de 0,5 mm et présentant de bonnes propriétés coloristiques quand on les incorpore dans un vernis classique pour encres offset, par exemple un vernis à base de résines alkydes.

La réunion des filtrats et eaux de lavage, neutralisés jusqu'à pH 9,5 à l'aide d'une solution aqueuse à 40 % d'hydroxyde de sodium, puis décolorés par addition de 5 g de charbon actif, fournit une solution aqueuse à 19 % d'acétate de sodium qui peut être utilisée telle quelle dans la fabrication de matières colorantes.

Exemple 6

On opère comme à l'exemple 5, sauf qu'on dissout 4,2 g de dioléate de N-oléyl propylènediamine (INIPOL 002 de la firme CECA) dans les 350 g d'anhydride acétique. On obtient des granulés pigmentaires ayant des caractéristiques dimensionnelles peu différentes de celles des granulés obtenus à l'exemple 5 et présentent un comportement satisfaisant dans les vernis à base de résinate et de toluène, destinés plus spécialement à la fabrication d'encres liquides pour héliogravure.

Exemple 7

Par empâtage d'un gâteau de presse et d'eau sous agitation efficace, on prépare 1 000 g d'une pâte fluide à 5,3 % du pigment rubis défini au premier paragraphe de l'exemple 5. Quand la pâte est bien homogène, on y ajoute 100 g d'acétate de sodium cristallisé, puis on coule en 2 minutes, sous 1 000 tr/min et à température inférieure à 15 °C, 350 g d'anhydride acétique dans lequel on a préalablement acétylé pendant 4 heures 4,2 g de laurylamine (NORAM 12D de la firme CECA). Les granulés se forment rapidement après la coulée de l'anhydride : le temps nécessaire à leur formation, dans les conditions de l'essai a été trouvé voisin de 4 à 5 minutes. On filtre et reprend les granulés humides dans 300 ml d'eau glacée. On ajoute ensuite en 30 minutes une solution aqueuse à 40 % d'hydroxyde de sodium jusqu'à pH 9,5, tout en maintenant la température en dessous de 25 °C. On filtre à nouveau et lave à l'eau pour éliminer l'acétate. Les granulés humides ont un extrait sec de 40 %. Après séchage à 70 °C, ils se présentent sous forme d'agglomérats arrondis, pour la plupart de dimension comprise entre 0,5 et 1 mm. Ils peuvent être facilement utilisés pour la coloration des encres.

D'autre part, en rassemblant les divers filtrats et eaux de lavage et en réglant leur pH à 9,5 à l'aide d'une solution d'hydroxyde de sodium, on obtient une solution aqueuse à environ 20 % d'acétate de sodium.

Exemple 8

A l'aide d'une turbine défloculeuse, on empâte 700 g d'un gâteau de filtration humide contenant 27 % du pigment rubis de formule :

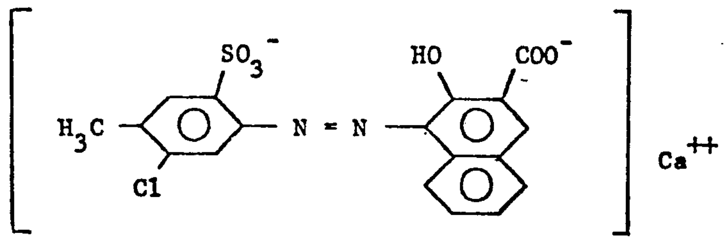

et une solution de 12 g de phtalate de dioctyle dans 400 g d'anhydride acétique. On refroidit extérieurement le réacteur et augmente progressivement la vitesse d'agitation jusqu'à 800-900 tr/min. Au bout de 15 à 20 minutes d'agitation turbulente, la température s'est élevée à 25-27 °C et on observe la formation de granulés qu'on sépare par filtration. On réempâte ces granulés pendant 20 minutes dans 400 ml d'eau à 35 °C puis on filtre à nouveau et lave à l'eau pour éliminer l'acide acétique. Après séchage des granulés humides (environ 42 % d'extrait sec) à 60-75 °C dans une étuve à air chaud, on obtient une composition pigmentaire qui se présente pour la majeure partie sous forme de granulés de taille comprise entre 0,5 et 2 mm. Ils conviennent bien pour la coloration des matières plastiques, notamment du polychlorure de vinyle.

Après décoloration à l'aide de 5 g de charbon actif, l'ensemble des filtrats et eaux de lavage fournit une solution aqueuse à 23 % d'acide acétique que l'on peut utiliser dans la fabrication de matières colorantes.

## Exemple 9

Si on opère comme à l'exemple 8, mais en remplaçant le phtalate de dioctyle par 9,5 g de monooléate de sorbitane (SPAN 80 commercialisé par la firme ATLAS), on obtient des granulés pigmentaires, dans l'ensemble un peu plus gros que ceux de l'exemple 8 ; la plupart d'entre eux ont une taille comprise entre 1 et 1,5 mm.

## Exemple 10

Dans un réacteur muni d'un agitateur à disque dentelé, on désagrège pendant 15 minutes 184 g d'un gâteau de filtre-presse humide contenant 38 % d'un pigment bleu de β-phtalocyanine de cuivre et 516 ml d'eau. On règle l'agitation à 800-1 000 tr/min et introduit ensuite en 2 à 3 minutes 400 g d'anhydride acétique. Le milieu se fluidifie très vite. On brasse pendant encore 20 minutes, puis on filtre les granulés formés et les réempâte sous agitation modérée (300 tr/min) pendant 20 minutes dans 400 ml d'eau à 50 °C. On filtre à nouveau les granulés, les lave sur filtre avec de l'eau pour éliminer l'acide acétique et les sèche à 70 °C dans une étuve à air chaud. On obtient ainsi un pigment bleu à l'état de granulés qui se présentent sous forme d'agglomérats arrondis de bonne régularité et ayant pour la plupart une taille voisine de 0,5 à 1 mm. Ils présentent de bonnes propriétés d'application dans les encres.

En rassemblant les filtrats et eaux de lavage, on obtient par ailleurs une solution aqueuse à 22 % d'acide acétique présentant une légère coloration bleue qu'on peut éliminer par traitement au charbon actif.

## Exemple 11

Dans un réacteur de 2 litres muni d'un dispositif d'agitation, on empâte dans 516 ml d'eau 368 g d'un gâteau de filtre-presse humide contenant 38 % de β-phtalocyanine de cuivre. Après 15 minutes d'homogénéisation, on règle la vitesse d'agitation à 1 000 tr/min, puis introduit en 2 minutes une solution de 7 g d'un mélange d'alcools gras linéaires en $C_{13}$ et $C_{15}$ (ACROPOL 35 commercialisé par la demanderesse) dans 300 g d'anhydride acétique. La granulation se produit très rapidement à température ambiante.

Dès que les granulés sont formés, on règle la vitesse d'agitation à 300 tr/min et poursuit le brassage pendant 20 minutes. La température du milieu réactionnel s'élève à 30-35 °C. On filtre ensuite, lave les granulés à l'eau pour éliminer l'acide acétique et sèche les granulés humides (extrait sec supérieur à 45 %) dans une étuve à 60-70 °C. Après séchage on obtient des granulés bleus ayant en majeure partie, une taille voisine de 0,5 mm. Leurs caractéristiques d'application sont aussi bonnes que celles des granulés de l'exemple précédent.

On recueille par ailleurs une solution aqueuse titrant 22 % en acide acétique.

## Exemple 12

Dans 400 ml d'eau et 250 ml d'une solution aqueuse à 2 % d'oléate de sodium, on empâte pendant 20 minutes sous vive agitation 105 g du pigment orangé de formule :

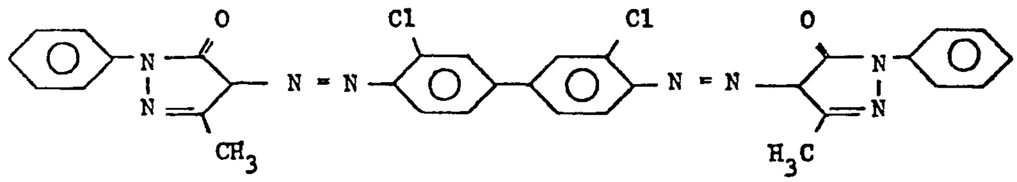

puis on introduit en 1 à 2 minutes sous vive agitation 300 g d'anhydride acétique. La température se maintient à 25-27 °C. Après formulation des granulés, on brasse pendant encore 13 minutes sous agitation modérée, puis on filtre, réempâte les granulés humides dans 500 ml d'eau à 40 °C pendant 15 à 20 minutes et filtre à nouveau. Après lavage sur filtre avec de l'eau, on sèche les granulés humides d'extrait sec particulièrement élevé (voisin de 55 %). On obtient une composition pigmentaire sous forme de granulés dont la plupart ont une taille comprise entre 0,5 et 1 mm. On peut les utiliser notamment pour la coloration des matières plastiques.

En rassemblant les filtrats et eaux de lavage, on obtient, après décoloration avec 2 g de charbon actif, une solution aqueuse à 23 % d'acide acétique.

Exemple 13

Dans 600 ml d'eau et 10 ml d'éthanol, on empâte 70 g du pigment jaune de formule :

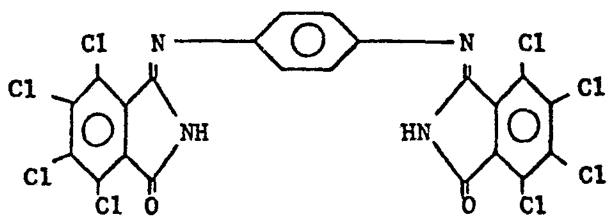

Quand la suspension est bien homogène, on y coule en 3 minutes sous vive agitation 300 g d'anhydride acétique. Après 12 minutes d'agitation turbulente, on filtre, reprend les granulés humides pendant 15 minutes dans 500 ml d'eau à 60 °C, filtre à nouveau et lave avec de l'eau. Les granulés humides ont un extrait sec de l'ordre de 52 %. Après séchage à 60-70 °C, on obtient des granulés jaunes, de bonne régularité et dont la plupart ont une taille voisine de 0,5 mm. Leur comportement d'application est jugé aussi bon que celui du pigment en poudre de départ.

En rassemblant les filtrats et eaux de lavage, on obtient une solution d'acide acétique à 20 %.

Exemple 14

On homogénéise sous bonne agitation 600 g d'un gâteau de filtration humide contenant 15 % du pigment jaune disazoïque décrit à l'exemple 1, avec 100 ml d'eau.

Par ailleurs, on dissout dans 40 g d'anhydride propionique 3 g d'un ester de pentaérythritol de la colophane modifiée maléique (PENTALYN G commercialisé par la firme HERCULES), puis ajoute à la solution 200 g d'anhydride acétique. On introduit ensuite rapidement ce mélange d'anhydrides dans la formation pigmentaire précédente, sous turbulence élevée (1 000 tr/min). Après 5 minutes de brassage, on réduit la vitesse d'agitation à 300 tr/min et introduit en environ une heure et demie une solution aqueuse à 40 % d'hydroxyde de sodium jusqu'à pH 9,5 tout en maintenant la température du mélange à 30-35 °C par refroidissement extérieur du réacteur. On brasse encore 30 minutes à pH 9,5 avant d'isoler les granulés. Après séchage à 70 °C, on obtient une composition pigmentaire jaune qui se présente sous forme de granulés arrondis dont la taille est, pour la plupart, comprise entre 0,5 et 1 mm. Ils conviennent bien pour la coloration des encres. On récupère d'autre part une solution aqueuse contenant environ 18 % d'acétate de sodium et 3,4 % de propionate de sodium.

Exemple 15

On empâte pendant 20 minutes 90 g du pigment orangé de périnone de formule :

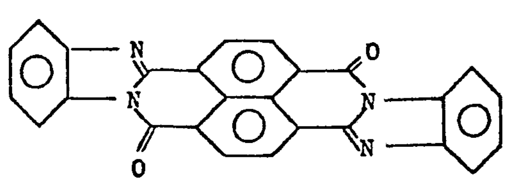

dans 400 ml d'eau et 100 ml d'une solution aqueuse à 3 % du sel de sodium de la colophane. On introduit ensuite en 5 minutes sous vive agitation une solution de 8 g de tribenzoate de triméthylol-éthane (BENZOFLEX S-432 commercialisé par la firme VELSICOL CHEMICAL CORP.) dans 450 g d'anhydride acétique. Après encore 15 minutes d'agitation, les granulés formés sont isolés par filtration, réempâtés dans l'eau à 40 °C, filtrés à nouveau et lavés. Après séchage des granulés humides dont la teneur en extrait sec est élevée (environ 45 %), on obtient une composition pigmentaire orangée sous forme de granulés assez homogènes dont la taille, pour la plupart, se situe entre 1 et 1,5 mm. Ils conviennent à la coloration des matières plastiques.

On récupère d'autre part une solution d'acide acétique à 24 %.

Exemple 16

On empâte sous bonne agitation 300 g d'un gâteau de presse contenant 38 % d'un pigment bleu de β-phtalocyanine de cuivre avec 500 g d'eau. On introduit ensuite en 20 minutes 145 g d'anhydride propionique sous vive turbulence, obtenue à l'aide d'un agitateur à disque dentelé tournant à 1 000 tr/min. La température monte à 28 °C et les granulés se forment dès la fin de l'introduction de l'anhydride. On neutralise alors la formation jusqu'à pH 9,5 en introduisant en 30 minutes sous agitation modérée (300-350 tr/min) environ 220 ml d'une solution aqueuse à 40 % d'hydroxyde de sodium ; la température s'élève à 40 °C.

On brasse encore 15 minutes, puis isole les granulés de façon habituelle. Les granulés humides ont un extrait sec très élevé (voisin de 59 %). Après séchage, ils se présentent sous forme de petits agglomérats de forme assez bien arrondie et de dimension comprise, pour la plupart, entre 0,3 et 0,5 mm. Ils ont un bon comportement coloristique dans les milieux d'application usuels de ce type de pigment.

On récupère d'autre part une solution aqueuse à 15 % de propionate de sodium qu'on peut utiliser dans l'industrie des matières colorantes.

Exemple 17

On empâte pendant 15 minutes sous agitation 100 g du pigment monoazoïque jaune de formule :

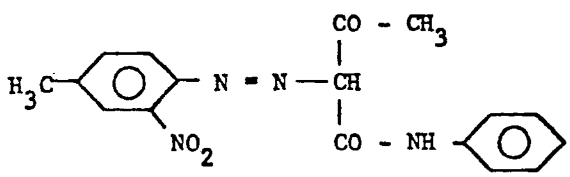

dans 600 ml d'eau et 5 g d'un condensat de 8 moles d'oxyde d'éthylène et 8 moles d'oxyde de propylène (EMKALYX-PLURONICS F88 commercialisé par la demanderesse). On introduit ensuite rapidement (2-3 minutes) et sous vive agitation 450 g d'anhydride acétique. Quand les granulés sont formés, on brasse encore pendant 30 à 35 minutes sous agitation modérée, en maintenant la température en dessous de 35 °C. On filtre ensuite les granulés et les lave à l'eau. Les granulés humides, à fort extrait sec (environ 50 %) sont séchés en étuve. On obtient des granulés ayant, pour la plupart, une taille comprise entre 0,5 et 1 mm. On peut les utiliser pour la coloration des encres à base d'eau ou de solvants polaires.

En rassemblant les filtrats et eaux de lavage, on obtient une solution aqueuse à 22 % d'acide acétique qui peut être utilisée dans la fabrication de matières colorantes, du moins pour certaines réactions où la présence du tensio-actif non ionique que contient cette solution, ne constitue pas une gêne.

Exemple 18

Dans un réacteur cylindrique muni d'un dispositif d'agitation efficace, on charge 700 g d'un gâteau de presse contenant 38 % d'un pigment bleu de β-phtalocyanine de cuivre, 5 g du sel disodique d'acide dinaphtylméthanedisulfonique (DISPERGINE CB commercialisée par la demanderesse) et 400 g d'anhydride acétique. Après 15 à 20 minutes de brassage sous agitation turbulente (1 000 tr/min), on isole les granulés formés. On les reprend dans 600 ml d'eau à 50 °C, puis on les filtre à nouveau, les lave à l'eau sur filtre et les sèche à 60-70 °C. Les granulés obtenus, dont la plupart ont une taille voisine de 1 mm, présentent un comportement d'application peu différent de celui du pigment en poudre correspondant.

Après clarfiltration en présence de charbon actif, on recueille par ailleurs une solution aqueuse à 24 % d'acide acétique qu'on peut utiliser directement dans la fabrication de certaines matières colorantes azoïques pour lesquelles la présence de dispersant anionique ne constitue pas une gêne.

**Revendications**

1. Procédé de granulation de pigments organiques par voie humide consistant à traiter sous vive agitation une suspension aqueuse de pigment par un solvant organique incomplètement miscible à l'eau,

caractérisé en ce que l'on utilise comme solvant organique l'anhydride acétique, l'anhydride propionique ou un mélange de ces anhydrides.

2. Procédé selon la revendication 1, caractérisé en ce que le système polyphasique initialement formé par la suspension aqueuse et l'anhydride ou le mélange d'anhydrides contient également un additif d'enrobage et/ou de granulation, solide ou liquide.

3. Procédé selon la revendication 2, caractérisé en ce que l'additif est introduit sous forme d'une solution, d'une dispersion ou d'une émulsion dans l'anhydride ou le mélange d'anhydrides.

4. Procédé selon la revendication 3, caractérisé en ce que l'additif est un dérivé acylé, préalablement formé et dissous dans l'anhydride ou le mélange d'anhydrides utilisé pour la granulation.

5. Procédé selon l'une des revendications 1 à 4, caractérisé en ce qu'on ajoute à la suspension aqueuse de pigment un sel alcalin de l'acide carboxylique correspondant à l'anhydride mis en œuvre.

6. Procédé selon l'une des revendications 1 à 5, caractérisé en ce qu'on opère en présence d'agents mouillants.

7. Procédé selon l'une des revendications 1 à 6, caractérisé en ce qu'on part d'un gâteau de presse de pigment.

8. Procédé selon l'une des revendications 1 à 7, caractérisé en ce que le rapport en poids : anhydride/pigment est compris entre 1,2 et 7.

9. Procédé selon l'une des revendications 1 à 8, caractérisé en ce qu'on utilise l'anhydride acétique.

10. Procédé selon l'une des revendications 1 à 8, caractérisé en ce qu'on utilise un mélange d'anhydride acétique et d'anhydride propionique.

11. Procédé selon l'une des revendications 1 à 10, caractérisé en ce qu'on isole les granulés juste après leur formation, puis les reprend dans l'eau pour achever l'hydrolyse et les isole à nouveau.

12. Granulés obtenus par un procédé selon l'une des revendications 1 à 11.

## Claims

1. A process for the wet granulation consisting of treating under vigorous agitation an aqueous suspension of a pigment with an organic solvent which is not completely miscible with water, characterised in that the organic solvent is acetic anhydride, propionic anhydride or a mixture of these anhydrides.

2. A process according to Claim 1 wherein the initial polyphasic system initially formed by the aqueous suspension and the anhydride or mixture of anhydrides also contains a solid or liquid coating or granulating additive.

3. A process according to Claim 2 wherein the additive is introduced in the form of a solution, dispersion or emulsion in the anhydride or mixture of anhydrides.

4. A process according to Claim 4 wherein the additive is an acyl derivative, previously formed and dissolved in the anhydride or mixture of anhydrides used for the granulation.

5. A process according to any one of Claims 1 to 4 wherein an alkaline salt of the carboxylic acid corresponding to the anhydride used is added to the aqueous suspension of the pigment.

6. A process according to any one of Claims 1 to 5 wherein the treatment is performed in the presence of a wetting agent.

7. A process according to any one of Claims 1 to 6 wherein the pigment is initially in the form of a press paste.

8. A process according to any one of Claims 1 to 7 wherein the ratio by weight of anhydride to pigment is between 1.2 and 7.

9. A process according to any one of Claims 1 to 8 wherein the organic solvent is acetic anhydride.

10. A process according to any of Claims 1 to 8 wherein the organic solvent is a mixture of acetic anhydride and propionic anhydride.

11. A process according to any one of Claims 1 to 10 wherein the granules are isolated immediately after their formation, mixed with water to complete the hydrolysis and re-isolated.

12. Granules obtained by a process according to any one of Claims 1 to 11.

## Ansprüche

1. Verfahren zur Naßgranulierung von organischen Pigmenten, bei welchem eine wäßrige Pigmentsuspension unter heftigem Rühren mit einem mit Wasser unvollständig mischbaren organischen Lösungsmittel behandelt wird, dadurch gekennzeichnet, daß man als organisches Lösungsmittel Essigsäureanhydrid, Propionsäureanhydrid oder ein Gemisch aus diesen Anhydriden verwendet.

2. Verfahren nach Anspruch 1, dadurch gekennzeichnet, daß das zu Beginn durch die wäßrige Suspension und das Anhydrid oder das Anhydridgemisch gebildete mehrphasige System außerdem einen festen oder flüssigen Einhüllungs- und/oder Granulierungszusatz enthält.

3. Verfahren nach Anspruch 2, dadurch gekennzeichnet, daß der Zusatz in Form einer Lösung, einer Dispersion oder einer Emulsion im Anhydrid oder Anhydridgemisch eingeführt wird.

4. Verfahren nach Anspruch 3, dadurch gekennzeichnet, daß der Zusatz aus einem vorher hergestellten und in dem für die Granulierung verwendeten Anhydrid oder Anhydridgemisch aufgelösten Acylderivat besteht.

5. Verfahren nach einem der Ansprüche 1 bis 4, dadurch gekennzeichnet, daß man der wäßrigen Pigmentsuspension ein Alkalimetallsalz der Carbonsäure zusetzt, welche dem verwendeten Anhydrid entspricht.

6. Verfahren nach einem der Ansprüche 1 bis 5, dadurch gekennzeichnet, daß man in Gegenwart von Netzmitteln arbeitet.

7. Verfahren nach einem der Ansprüche 1 bis 6, dadurch gekennzeichnet, daß man von einem Preßkuchen des Pigments ausgeht.

8. Verfahren nach einem der Ansprüche 1 bis 7, dadurch gekennzeichnet, daß das Anhydrid/Pigment-Gewichtsverhältnis zwischen 1,2 und 7 liegt.

9. Verfahren nach einem der Ansprüche 1 bis 8, dadurch gekennzeichnet, daß man Essigsäureanhydrid verwendet.

10. Verfahren nach einem der Ansprüche 1 bis 8, dadurch gekennzeichnet, daß man ein Gemisch aus Essigsäureanhydrid und Propionsäureanhydrid verwendet.

11. Verfahren nach einem der Ansprüche 1 bis 10, dadurch gekennzeichnet, daß man die Granalien kurz nach ihrer Bildung isoliert, zwecks Hydrolyse wieder in Wasser aufnimmt und erneut isoliert.

12. Granalien, welche durch ein Verfahren nach einem der Ansprüche 1 bis 11 erhalten worden sind.